# EUROPÄISCHE PATENTSCHRIFT

(11) **EP 0 427 671 B1**
(45) Veröffentlichungstag und Bekanntmachung des Hinweises auf die Patenterteilung: **27.07.1994**
(21) Anmeldenummer: 90810830.1
(22) Anmeldetag: 30.10.1990
(51) Int. Cl.: G01N 30/20

(54) **Ventil**
Valve
Vanne

(30) Priorität: 08.11.1989 CH 4017/89
(43) Veröffentlichungstag der Anmeldung: 15.05.1991
(73) Patentinhaber: CIBA-GEIGY AG, 4002 Basel (CH)
(72) Erfinder: Pericles, Nico, CH-5027 Herznach (CH)

(56) Entgegenhaltungen:
- DE-A- 3 608 550
- FR-A- 2 425 599
- US-A- 3 386 472

## Beschreibung

Die Erfindung betrifft ein Ventil, insbesondere ein Hochdruckregelventil gemäss Oberbegriff des Patentanspruchs 1.

Solche Hochdruckventile werden in der Chromatographie (supercritical fluid chromatography - kurz "SFC") bei Drücken bis zu einigen hundert bar eingesetzt. Sie haben dort die Aufgabe eines Gegendruck-Regelventiles, welches in einer Trennsäule einen bestimmten, vorgebbaren Druck aufrechterhält. Sie werden aber auch bei Extraktionsprozessen mit überkritischen Medien und allgemein bei Systemen eingesetzt, bei denen es nötig ist, den Druckverlauf von Gasen, Flüssigkeiten und überkritischen Medien zeitlich zu kontrollieren und zu regeln.
Zur Betätigung des Ventiles ist es bereits bekannt, einen elektromagnetischen Antrieb zu verwenden, der den Ventilkörper gegen eine Federkraft in Oeffnungsrichtung bewegen kann. Bei solchen Ventilen ist ein manuelles Einstellen der Ausgangslage des Ventiles für einen bestimmten Arbeitsbereich notwendig. Dieses Einjustieren muss sehr sorgfältig erfolgen und erfordert dementsprechend viel Zeitaufwand. Auch muss die Schliessfederkraft so bemessen sein, dass einerseits ein dichtes Schliessen möglich ist und dass andererseits ein Beschädigen des Ventilsitzes bzw. einer dort befindlichen Dichtung vermieden wird. Die Schliesskraft der Feder darf höchstens so gross sein wie die zum Oeffnen zur Verfügung stehende Magnetkraft.

Durch den Uebergang beim Ventil von einem Hochdruckbereich zu einem Niederdruckbereich besteht bei der Entspannung des überkritischen Mediums die Gefahr der Vereisung, die zu einer erheblichen Beeinträchtigung der Regelfunktion des Ventiles oder zur Zerstörung des Ventilsitzes führen kann. Andererseits ist es aber für ein präparatives Arbeiten erforderlich, dass Medium in fester Form (Eis) auffangen zu können. Die Funktionsbeeinträchtigung des Ventiles bei Vereisung ist darauf zurückzuführen, dass zwischen Ventilsitz und Ventilkörper Eis ansetzt und dann ein Schliessen des Ventiles dadurch behindert ist. Dies gilt analog auch für andere, im Untersuchungsmedium gegebenenfalls enthaltene Festpartikel.
Bei elektromagnetischen Regelventilen, bei denen eine Feder das Schliessen übernimmt, ist deren Federkraft auf den "Normalbetrieb" so abgestimmt, dass einerseits ein sicheres Funktionieren erreicht wird und andererseits aber Beschädigungen am Ventil vermieden werden. Diese Federeinstellung reicht aber in der Regel zum Ueberwinden der Vereisung oder sonstiger Festpartikel beim Schliessen nicht aus, so dass die Ventilregelfunktion gestört ist. Wenn der Ventilsitz und der Ventilkörper einander zugewandte und in Schliessstellung aufeinander liegende Stirnseiten haben, kann die Vereisung oder dergleichen flächig auftreten, so dass noch grössere Stellkräfte zum Wegdrücken dieser Festpartikel erforderlich wären.

Es sind zwar auch Nadelventile bekannt, die bei vorhandenen Festkörpern und Vereisung weniger problematisch sind, jedoch sind diese mechanisch anfällig.

Um ein Vereisen des Gegendruck-Regelventiles und damit eine Funktionsbeeinträchtigung zu vermeiden, sind bereits Anordnungen mit einer Mehrstufen-, meist Zweistufenentspannung mit mehreren Ventilen bekannt, wobei das Regelventil im Bereich der ersten Entspannungsstufe angeordnet ist. Die Druckdifferenz in dieser Stufe ist so bemessen, dass ein Vereisen noch nicht auftreten kann. Allerdings erfordert diese mehrstufige Anordnung einen zusätzlichen Aufwand.
Um ein Vereisen zu vermeiden, kann im Bereich des Regelventiles auch eine Heizung vorgesehen sein. In der Praxis ist dies jedoch aus Platzgründen meist nur schwierig möglich. Zudem ist bei der gegebenen Geometrie die Wärmeübertragung meistens zu klein. Ausserdem lassen sich dann bei beheizten Ventilen präparative Arbeiten nicht durchführen.

In der FR-A-2,425,559 ist ein Ventil beschrieben, das mittels eines Piezokristalls geöffnet wird. Die Schliessung des Ventils erfolgt über eine mechanische Feder. Dieses Ventil wird für Drücke unter 1 bar eingesetzt, insbesondere kommt es beim Einführen geregelter Gasströme in das Vakuum zum Einsatz. Für die Verwendung als Hochdruckregelventil für Drücke von einigen hundert bar, z.B. bis zu 800 bar, ist dieses Ventil jedoch nicht geeignet, da eine mechanische Feder derartigen Drücken nicht standhalten würde.

In der DE-A-36 08 550 ist ein piezo-elektrisch betätigbares Dreiwege-Steuerventil beschrieben. Ein oder mehrere Dichtkörper steuern, welche beiden von drei Kanälen miteinander in Verbindung stehen. Bei einem Ausführungsbeispiel ist wenigstens ein Dichtkörper am freien Ende einer balkenförmigen einseitig eingespannten Piezokristall-Anordnung zwischen zwei Ventilsitzen angeordnet. Der aus einem flexiblen Material geformte Dichtkörper liegt entweder am einen oder am anderen Ventilsitz an und steuert derart den Durchfluss. Die balkenförmige Piezokristall-Anordnung ist derart mechanisch vorgespannt, dass der Dichtkörper im Ruhezustand an dem einen und im elektrisch erregten Zustand an dem anderen Ventilsitz anliegt. Eine Schraubenfeder ist vorgesehen, um im Ruhezustand die Anlage des Dichtkörpers an den einen Ventilsitz zu unterstützen. Durch elektrische Erregung der Piezokristall-Anordnung wird der Dichtkörper gegen die Kraftwirkung der Schraubenfeder gegen den anderen Ventilsitz gedrückt. Zur Bewegung des Dichtkörpers sind also zwei Mechanismen erforderlich, eine aktive Piezokristall-Anordnung und eine passiv wirkende Schraubenfeder. Insbsondere bei der Schraubenfeder besteht aber der Nachteil, dass der Schliessdruck durch die Federkraft vorgegeben und nicht regelbar ist. Dadurch ist dieses bekannte Dreiwege-Steuerventil nur bedingt für höhere Drücke einsetzbar. Für Anwendungen in der Chromatographie, in denen sehr hohe Drücke, beispielsweise bis zu 800 bar, auftreten können, ist dieses bekannte Steuerventil daher nicht geeignet.

Der Dichtkörper des in der DE-A-36 08 550 beschriebenen Dreiwege-Steuerventils ist aus einem flexiblen Material. In der Schliessstellung wird der flexible Dichtkörper durch den Schliessdruck gegen den Ventilsitz gepresst. Dadurch wird der flexible Dichtkörper verformt, und kommt zu einer flächigen Anlage des Dichtkörpers am Ventilsitz. Im Falle einer Vereisung des flächigen Anlagebereiches bei tiefen Temperaturen, beispielsweise bei der Expansion eines überkritischen Mediums, ist ein sehr hoher Schliessdruck erforderlich, um das Ventil überhaupt schliessen zu können. Insbesondere im Falle der Betätigung durch die Schraubenfeder kann die Federkraft nicht ausreichend sein, um das Ventil zuverlässig zu schliessen.

Ein ähnliches Dreiweg-Schaltventil ist in der US-A-3,386,472 beschrieben. Bei diesem Ventil werden mit Hilfe eines magnetisch betätigbaren Dichtkörpers verschiedene Kanäle im Ventil durchgeschaltet. Als Hochdruckregelventil ist dieses Dreiweg-Ventil nicht einsetzbar.

Aufgabe der vorliegenden Erfindung ist es, ein Hochdruckregelventil, insbesondere ein Zweiweghochdruckregelventil, zu schaffen, welches eine hohe Regelgenauigkeit über den gesamten Regelbereich hat, das darüberhinaus so ausgebildet ist, dass eine einzige Entspannungsstufe genügt, wobei ohne nachteilige Funktionsbeeinträchtigung des Regelventiles auch präparativ gearbeitet werden kann. Ausserdem soll das Durchgangsvolumen des Ventiles möglichst klein sein.

Zur Lösung dieser Aufgabe wird ein Hochdruckregelventil vorgeschlagen, welches die im Kennzeichnenden Teil des Patentanspruchs 1 angeführten Merkmale aufweist. Die erfindungsgemässe Ausbildung der Ventilteile ergibt eine linienförmige Dichtanlage in Schliessstellung, wobei durch die Lage der Dichtzone beim Oeffnungsrand des durch eine Kapillare gebildeten Auslasskanales eine Vereisung nur in einem sehr schmalen Bereich auftreten kann. Dementsprechend ist die erforderliche Kraft zum Schliessen des Ventiles auch bei auftretender Vereisung oder anderweitigen, dazwischen befindlichen Festpartikeln erheblich reduziert. In Verbindung mit dem in Schliessrichtung aktiv arbeitenden Stellantrieb des Ventiles ergibt sich auch unter ungünstigen Bedingungen ein präzises Regelverhalten des Ventiles, da nun auch in Schliessrichtung die vom Regler vorgegebene Ventilstellung aktiv eingenommen wird. Der Schliessdruck ist somit nicht gleichbleibend für alle Fälle fest vorgegeben wie bei einem Schliessantrieb durch eine Feder, sondern die Regelung wirkt hier auch aktiv in Schliessrichtung. Unter normalen Bedingungen wird somit die Antriebskraft beim Schliessen des Ventiles nur soweit ansteigen, bis sich die vorgegebenen Druckverhältnisse einstellen, so dass die Belastung des Ventiles nur entsprechend den Erfordernissen erfolgt. Dies trägt mit zu einem störungsfreien Betrieb auch über längere Zeit bei.
Andererseits steht aber bedarfsweise auch eine wesentlich höhere Antriebskraft zur Verfügung, insbesondere wenn das Ventil bei Eisansatz oder dazwischen befindlichen Festpartikeln geschlossen werden soll, so dass auch beim präparativen Arbeiten keine Störungen auftreten.

Vorteilhafterweise ist als Ventilkörper-Schliessantrieb ein piezoelektrischer Wandler vorgesehen. Ein solcher Piezowandler als Stellantrieb für das Regelventil hat den Vorteil, dass bei den im vorliegenden Anwendungsfall vorgesehenen, kleineren Stellwegen im Bedarfsfalle, zum Beispiel bei Vereisung eine grosse Stellkraft zur Verfügung steht, die aber im Normalfall automatisch entsprechend reduziert wird. Vorteilhaft ist weiterhin, dass dieser Stellantrieb sowohl die Oeffnungsbewegung als auch die Schliessbewegung kontrolliert, so dass der Aufbau insgesamt vereinfacht ist. Dies begünstigt auch eine kleinvolumige Bauweise, durch die das Durchgangsvolumen des Ventiles klein gehalten werden kann. Vermischungen der durchfliessenden Medien können somit verhindert werden. Auch lässt sich dadurch im Bedarfsfalle günstiger eine Heizung einsetzen. Durch die kompakte Bauweise ergeben sich grosse Wärmeaustauschflächen, welche die Wärmeübergangseigenschaften verbessern.

Zweckmässigerweise weist der Ventilkörper eine dem Ventilsitz zugewandte, etwa plane Schliesseite und der Ventilsitz eine ballige, konvexe Oberfläche mit etwa mittig darin befindlicher Auslasskanal-Oeffnung auf. Diese bevorzugte Ausführungsform ist einfach herstellbar, wobei die ballige, abgerundete Oberfläche des Ventilsitzes zum Beispiel durch Polieren hergestellt werden kann.

Zusätzliche Ausgestaltungen der Erfindung sind in den weiteren abhängigen Ansprüchen, aufgeführt. Nachstehend ist die Erfindung mit ihren wesentlichen Einzelheiten anhand der Zeichnungen noch näher erläutert.

Es zeigt:
- Fig. 1: eine schematische Darstellung einer Druckregeleinrichtung,
- Fig. 2: eine Seitenansicht eines Druckregelventiles,
- Fig. 3-7: unterschiedliche Ausbildungen von zu einem Druckregelventil gehörenden Ventilsitzen und Ventilkörpern und
- Fig. 8: eine Seitenansicht eines Druckregelventiles ähnlich der Ausführungsform gemäss Fig. 2, hier jedoch mit Zusatzeinrichtung.

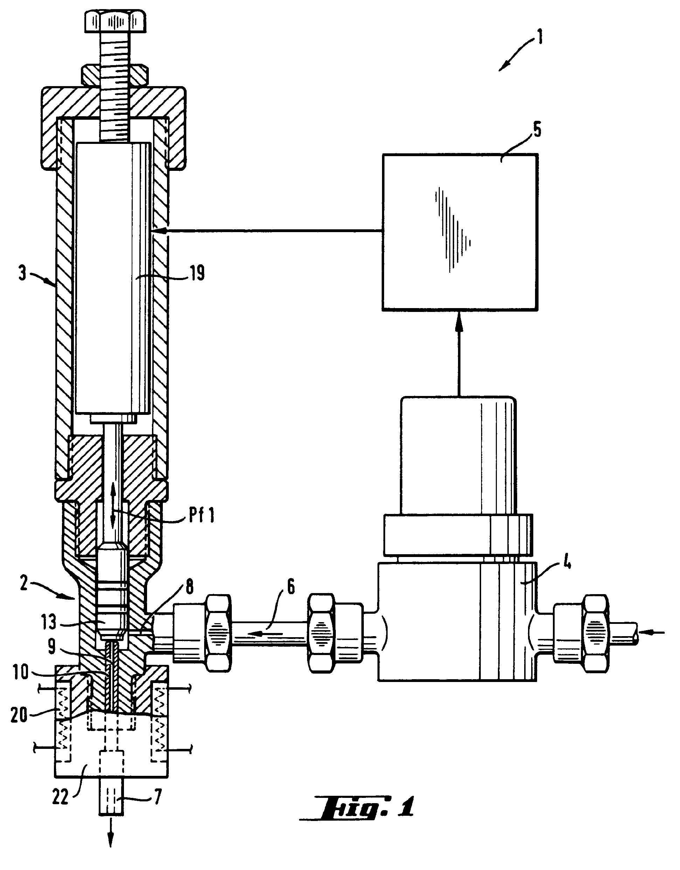

Eine in Fig. 1 gezeigte Druckregeleinrichtung 1 weist ein schematisch dargestelltes Hochdruckregelventil 2 mit einem Stellantrieb 3 auf. Das Hochdruckregelventil dient bei der Chromatographie überkritischer Strömungsmedien als Gegendruck-Regelventil, welches eine auf der Druckseite vorgeschaltete Trennsäule unter bestimmten, vorgebbaren Druckverhältnissen hält. Auf der Zuströmseite des Hochdruckregelventiles befindet sich ein Druckmesswandler 4, der mit einem elektronischen Reglers verbunden ist. Dieser ist wiederum mit dem Stellantrieb 3 des Hochdruckregelventiles verbunden, so dass ein geschlossener Regelkreis vorhanden ist.
Das Hochdruckregelventil 2 hat eine Hochdruckzuleitung 6 sowie eine Niederdruckseite 7 mit Uebergang zum Atmosphärendruck. Je nach Stellung des Hochdruckregelventiles stellt sich auf dessen Hochdruckseite, wo sich auch die hier nicht dargestellte Füllkörpersäule befindet, ein entsprechender "Staudruck" ein. Die Arbeitsdrücke können dabei einige hundert bar, zum Beispiel bis zu 800 bar betragen.

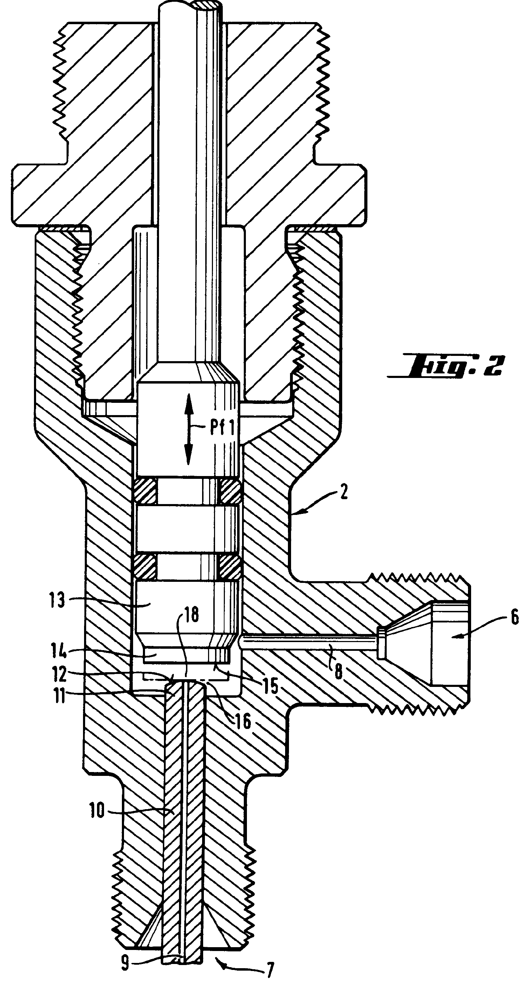

Fig. 2 zeigt deutlicher den Aufbau des Hochdruckregelventiles 2. Es weist einen mit der Hochdruckzuleitung 6 verbundenen Einlasskanal 8 sowie einen als Kapillare ausgebildeten Auslasskanal 9 auf. Der Auslasskanal 9 befindet sich innerhalb eines Kapillarröhrchens 10, dessen Eintrittsende 11 einen Ventilsitz 12 bildet, der mit einem Ventilkörper 13 zusammenarbeitet. Der Ventilkörper 13 ist mit Hilfe des in Fig. 1 angedeuteten Stellantriebes 3 gemäss dem Doppelpfeil Pf 1 verstellbar. Der Ventilkörper 13 hat an seiner dem Ventilsitz 12 zugewandten Seite eine Dichtscheibe 14, die beim Schliessen des Ventiles in Anlage mit dem Ventilsitz 12 kommt. Die Dichtscheibe 14 kann aus blankpoliertem Metall sein, vorzugsweise ist sie aber aus Teflon® (Polytetrafluoräthylen PTFE).

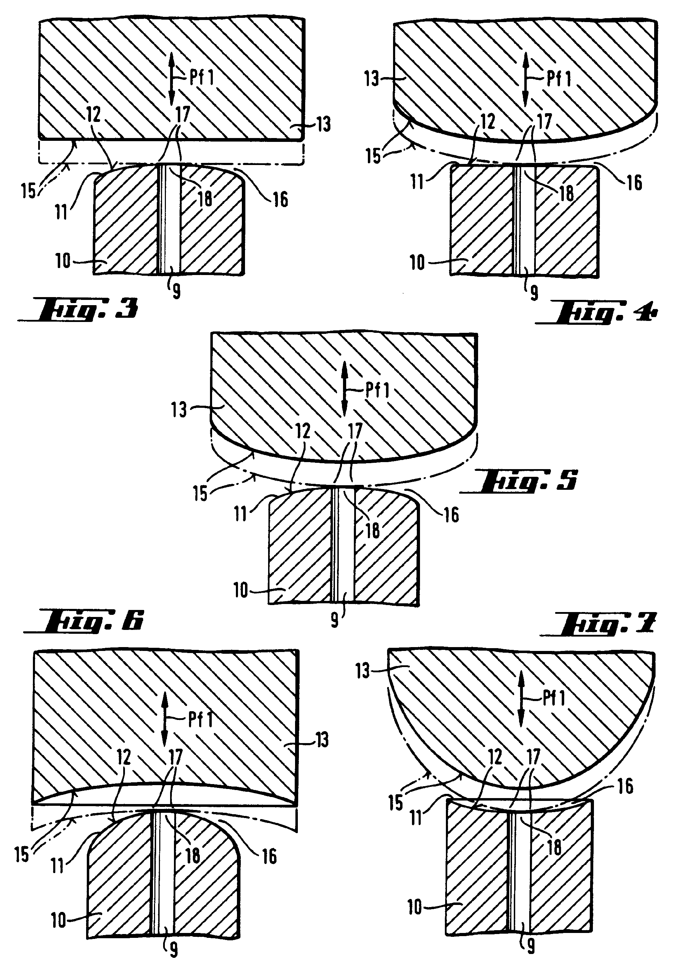

Eine Besonderheit des erfindungsgemässen Hochdruckregelventiles 2 besteht nun in der besonderen Formung des Ventilkörpers und/oder des Ventilsitzes, wie dies in verschiedenen Ausführungsformen gemäss Fig. 3 bis 7 gezeigt ist. Zwischen der Oberfläche des Ventilsitzes 12 und der dieser zugewandten Schliesseite 15 des Ventilkörpers 13 ist ein sich etwa radial nach aussen erweiternder Ringspalt 16 gebildet. Die Formgebung von Ventilsitz 12 und Schliesseite 15 sind dabei so vorgesehen, dass in Schliessstellung des Ventiles mit Anlage des Ventilkörpers am Ventilsitz eine ringförmige Dichtzone am Oeffnungsrand 17 des eine Kapillare bildenden Auslasskanales 9 vorhanden ist. Diese vergleichsweise schmale Dichtzone führt einerseits zu einer besseren Abdichtung in Schliessstellung und auch zu besseren Regeleigenschaften des Ventiles, da hierdurch günstigere Durchtrittsverhältnisse vorhanden sind. Auch führen im Durchströmmedium enthaltene Festpartikel dadurch praktisch nicht mehr zu Störungen, da ein Festsetzen durch die Ausbildung des Ringspaltes weitgehend verhindert wird. Auch begünstigt die schmale Dichtzone unmittelbar beim Kapillaren-Oeffnungsrand ein Zerdrücken und Abtransportieren von dort festhängenden Partikeln durch den Ventilkörper 13. Festpartikel können beispielsweise durch die Druckreduzierung entstehende Eispartikel sein.

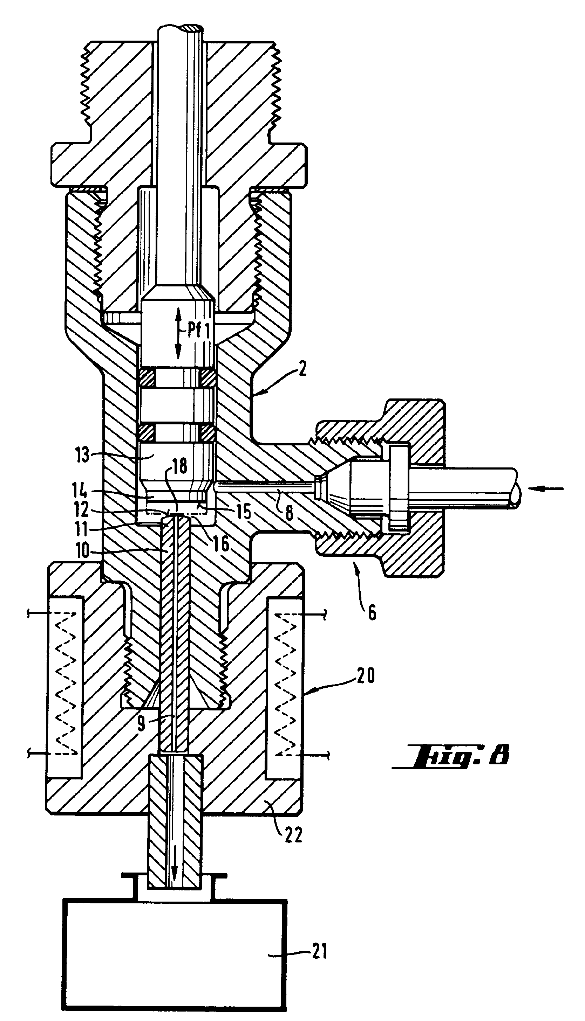

Allen in Fig. 3 bis 7 gezeigten Ausführungsformen ist gemeinsam, dass sich der Ringspalt 16 nach aussen erweitert. Fig. 3 zeigt die bevorzugte Ausführungsform, wo die Ventilkörper-Schliesseite 15 plan ausgebildet ist und der dieser Seite gegenüberliegende Ventilsitz eine ballige, konvexe Oberfläche aufweist. Mittig innerhalb dieser balligen Oberfläche des Ventilsitzes 12 befindet sich die Oeffnung 18 des Auslasskanales 9. Diese bevorzugte Ausführungsform ist insbesondere auch einfach herstellbar. Fig. 4 zeigt einen planen Ventilsitz und einen an seiner Schliesseite 15 konvex gewölbten Ventilkörper 13.
Fig. 5 zeigt eine Ausführungsform, bei der sowohl die Schliesseite 15 des Ventilkörpers 13 als auch die Oberfläche des Ventilsitzes 12 konvex gewölbt sind. Fig. 6 zeigt eine Ausführungsform, bei der die Schliesseite 15 des Ventilkörpers 13 konkav gewölbt ist, während die Oberfläche des Ventilsitzes konvex gewölbt ist. Der Krümmungsradius der konkaven Seite ist hierbei wesentlich grösser als der der konvexen Ventilsitz-Seite, so dass sich wiederum ein nach aussen erweiternder Ringspalt 16 ergibt. Fig. 7 zeigt praktisch die Umkehrung der in Fig. 6 gezeigten Ausführungsform, wo die Ventilsitz-Seite konkav und die Schliesseite 15 des Ventilkörpers 13 konvex gekrümmt sind, wobei hier der Krümmungsradius der konkaven Wölbung grösser ist als der Krümmungsradius der konvexen Wölbung der Schliesseite 15. Auch hier ist wiederum ein sich radial nach aussen erweiternder Ringspalt 16 gebildet.

Als Stellantrieb 3 für den Ventilkörper 13 dient ein in Fig. 1 gezeigter Piezowandler 19. Dieser kann den Ventilkörper 13 in Schliessrichtung aktiv bewegen und in Oeffnungsrichtung eine genau definierte Weglänge freigeben. Es lassen sich dabei bei kleinen Stellwegen hohe Verstellkräfte erzeugen. In Verbindung mit der speziellen Formgebung der einander zugewandten Seiten des Ventilsitzes 12 und des Ventilkörpers 13 ergeben sich besonders günstige Betriebsverhältnisse, wobei insbesondere mit sehr hohen Drücken gearbeitet werden kann (zum Beispiel bis zu 800 bar) und wobei auch Festpartikel im Ventilbereich nicht zu Funktionsstörungen führen. Durch den in Schliessrichtung aktiven Stellantrieb und die vergleichsweise schmale Dichtzone können gegebenenfalls vorhandene Festpartikel weggedrückt werden, ohne dass sie die guten Regeleigenschaften des Ventiles beeinträchtigen.
Insbesondere beim präparativen Arbeiten, wo auf der Niederdruckseite 7 des Ventiles das Medium in Form von Trockeneis ausgestossen wird, ist der vorbeschriebene Sachverhalt von erheblichem Vorteil. Setzt sich nämlich beim präparativen Arbeiten im Ventilbereich Eis an, so führt dies nicht wie bisher zu Funktionsstörungen, da einerseits durch den aktiven Schliessantrieb des Ventiles und andererseits durch die Formgebung der Ventilkörper-Schliesseite beziehungsweise des Ventilsitzes der Eisansatz überwunden werden kann, so dass keine Störungen auftreten. Es besteht somit die Möglichkeit, mit einer einzigen Entspannungsstufe auszukommen.

Die Fig. 1 und 8 zeigen eine gegenüber Fig. 2 erweiterte Ausbildung mit einer im Bereich des Ventiles, insbesondere im Bereich des Ventilsitzes 12 angeordneten Heizung 20. Bleibt diese Heizung 20 ausgeschaltet, so ist ein präparatives Arbeiten mit Trockeneisausstoss auf der Niederdruckseite 7 möglich, wobei das Trockeneis (Schnee) die zu isolierenden Produkte enthält, die dann in einem in Fig. 8 angedeuteten Behälter 21 aufgefangen und gesammelt werden können. Zur analytischen Mess-Chromatographie wird die Heizung 20 eingeschaltet und der um den Auslasskanal 9 herum befindliche Heizblock 22 wird beispielsweise auf eine vorzugsweise thermostatisch geregelte Temperatur von 45°C gebracht. In diesem Falle erfolgt keine Eisbildung bei der Entspannung des bei solchen Verfahren meist verwendeten Kohlendioxids.

Insgesamt ist durch die erfindungsgemässen Massnahmen - Verwendung eines Piezo-Stellantriebes; spezielle Formgebung von Ventilsitz und Ventilkörper - die Gefahr des Verstopfens, Verschliessens oder gar Zerstörens der Kapillaröffnung 18 durch Eisansatz oder andere Festpartikel praktisch nicht mehr vorhanden. Dadurch ist u.a. ein vereinfachter Gesamtaufbau und auch eine höhere Betriebssicherheit gegeben.

## Patentansprüche

1. Hochdruckregelventil zum Einsatz in Verbindung mit überkritischen Medien in der Chromatographie, welches einen Ventilsitz (12) mit einer mittig darin befindlichen Auslasskanal-Öffnung (18) und einen mit dem Ventilsitz (12) zusammenwirkenden und mit Hilfe eines Stellantriebes (3) aktiv in Öffnungsrichtung verstellbaren Ventilkörper (13) zum Verschliessen der Auslasskanal-Oeffnung (18) aufweist, wobei die einander zugewandten Seiten des Ventilsitzes (12) und des Ventilkörpers (13) so geformt sind, dass sich, ausgehend von einer Dichtzone, in der der Ventilkörper (13) und der Ventilsitz (12) in der Schliessstellung des Ventils anliegen, ein radial nach aussen erweiternder Ringspalt (16) ergibt, dadurch gekennzeichnet, dass der Ventilkörper (13) mit Hilfe des Stellantriebes (3) in Schliessrichtung aktiv derart verstellbar ist, dass der Schliessdruck regelbar ist, und dass die Dichtzone direkt um den Öffnungsrand (17) des Auslasskanals verläuft und linienförmig ausgebildet ist.

2. Ventil nach Anspruch 1, dadurch gekennzeichnet, dass der Stellantrieb (3) ein piezoelektrischer Wandler ist.

3. Ventil nach Anspruch 2, dadurch gekennzeichnet, dass der piezoelektrische Wandler (19) an einen Regler (5) angeschlossen ist, der mit einem in Durchströmrichtung vor dem Ventil angeordneten Drucksensor (4) verbundenen ist.

4. Ventil nach einem der Ansprüche 1 bis 3, dadurch gekennzeichnet, dass der Ventilsitz (12) eine ballige, konvexe oder kegelige Oberfläche aufweist.

5. Ventil nach einem der Ansprüche 1 bis 4, dadurch gekennzeichnet, dass die dem Ventilsitz (12) zugewandte Seite des Ventilkörpers (13) eine etwa plane Fläche (15) aufweist.

6. Ventil nach einem der Ansprüche 1 bis 3, dadurch gekennzeichnet, dass die dem Ventilkörper zugewandte Seite des Ventilsitzes (12) eine etwa plane Fläche aufweist, während die gegenüberliegende Schliesseite (15) des Ventilkörpers (13) ballig, konvex oder kegelig ausgebildet ist.

7. Ventil nach einem der Ansprüche 1 bis 4, dadurch gekennzeichnet, dass die einander zugewandten Seiten des Ventilsitzes (12) und des Ventilkörpers (13) ballige, konvexe oder kegelige Oberflächen aufweisen.

8. Ventil nach einem der Ansprüche 1 bis 3, dadurch gekennzeichnet, dass eine der einander zugewandten Seiten einerseits des Ventilsitzes (12) und andererseits des Ventilkörpers (13) eine konvexe oder dergleichen vorstehende Form und die jeweils andere Seite eine konkave oder dergleichen zurückweichende Form haben, und dass die Wölbungsradien bzw. die Schrägwinkel der konkaven oder zurückweichenden Seiten jeweils grösser als die der konvexen oder vorstehenden Seiten sind.

9. Ventil nach einem der Ansprüche 1 bis 8, dadurch gekennzeichnet, dass der Ventilkörper (13) an seiner Schliesseite (15) eine Dichtung (14) vorzugsweise aus PTFE trägt.

10. Ventil nach einem der Ansprüche 1 bis 9, dadurch gekennzeichnet, dass im Bereich des Ventilsitzes (12) eine Heizung (20) angeordnet ist.

11. Ventil nach einem der Ansprüche 1 bis 8, dadurch gekennzeichnet, dass der Ventilkörper (13) an seiner Schliesseite (15) eine Dichtscheibe (14) aus blankpoliertem Metall trägt.

12. Ventil nach einem der vorangehenden Ansprüche, dadurch gekennzeichnet, dass die Auslasskanal-Öffnung (18) am Ende eines kapillarenförmigen Auslasskanals (9) vorgesehen ist.

## Claims

1. A high-pressure control valve for use in connection with supercritical media in chromatography, the valve having a valve seat (12) having an outlet-channel opening (18) located in its centre and a valve body (13) for closing the outlet-channel opening (18), which valve body cooperates with the valve seat (12) and is actively movable in the opening direction with the aid of an adjusting drive (3), the facing sides of the valve seat (12) and the valve body (13) being so shaped that, starting from a sealing zone in which the valve body (13) and the valve seat (12) rest against each other when the valve is in the closed position, an annular gap (16) that widens radially towards the outside is produced, wherein the valve body (13) is actively movable in the closing direction with the aid of the adjusting drive (3) in such a manner that the closing pressure is controllable and wherein the sealing zone extends directly around the edge (17) of the opening of the outlet channel and is linear.

2. A valve according to claim 1, wherein the adjusting drive (3) is a piezo-electric transducer.

3. A valve according to claim 2, wherein the piezoelectric transducer (19) is connected to a control means (5) connected to a pressure sensor (4) arranged upstream of the valve in the throughflow direction.

4. A valve according to any one of claims 1 to 3, wherein the valve seat (12) has a spherical, convex or conical surface.

5. A valve according to any one of claims 1 to 4, wherein the side of the valve body (13) that faces the valve seat (12) has an approximately plane face (15).

6. A valve according to any one of claims 1 to 3, wherein the side of the valve seat (12) that faces the valve body has an approximately plane face, while the opposing closing face (15) of the valve body (13) is spherical, convex or conical.

7. A valve according to any one of claims 1 to 4, wherein the facing sides of the valve seat (12) and of the valve body (13) have spherical, convex or conical surfaces.

8. A valve according to any one of claims 1 to 3, wherein one of the facing sides of the valve seat (12) on the one hand and of the valve body (13) on the other hand has a convex or similarly projecting shape and the other of those sides has a concave or similarly recessed shape and wherein the radii of curvature or the angles of inclination of the concave or recessed sides are greater in each case than those of the convex or projecting sides.

9. A valve according to any one of claims 1 to 8, wherein the valve body (13) carries on its closing face (15) a seal (14), preferably made of PTFE.

10. A valve according to any one of claims 1 to 9, wherein a heating means (20) is arranged in the region of the valve seat (12).

11. A valve according to any one of claims 1 to 8, wherein the valve body (13) carries on its closing face (15) a sealing disc (14) of brightly polished metal.

12. A valve according to any one of the preceding claims, wherein the outlet-channel opening (18) is provided at the end of an outlet channel (9) which is in the form of a capillary.

## Revendications

1. Valve de régulation de haute pression destinée à être utilisée en liaison avec des fluides sur-critiques en chromatographie, cette valve présentant un siège (12) de valve comportant une ouverture (18) de canal de sortie et un tiroir (13) de valve coopérant avec le siège (12) de valve et susceptible d'être déplacé à l'aide d'un élément (3) d'entraînement de réglage de façon active dans le sens de l'ouverture en vue de fermer l'ouverture (18) du canal de sortie, les côtés du siège (12) de valve et du tiroir (13) de valve dirigés l'un vers l'autre ayant une forme telle qu'à partir d'une zone d'étanchéité dans laquelle le tiroir (13) de valve et le siège (12) de valve sont appliqués l'un sur l'autre, la valve étant en position de fermeture, une fente annulaire s'élargissant radialement vers l'extérieur est obtenue, valve caractérisée en ce que le tiroir (13) de valve peut être déplacé activement à l'aide de l'élément (3) d'entraînement de réglage dans le sens de la fermeture de façon telle que la pression de fermeture est réglable et que la zone d'étanchéité s'étend directement autour du bord (17) de l'ouverture du canal de sortie et a une forme linéaire.

2. Valve selon la revendication 1, caractérisée en ce que l'élément (3) d'entraînement de réglage est un convertisseur piézoélectrique.

3. Valve selon la revendication 2, caractérisée en ce que le convertisseur piézoélectrique (19) est connecté à un dispositif de régulation (5) qui est lui-même connecté à un détecteur (4) de pression, disposé en amont de la valve dans la direction de transit.

4. Valve selon l'une des revendications 1 à 3, caractérisée en ce que le siège (12) de valve présente une surface bombée, convexe ou conique.

5. Valve selon l'une des revendications 1 à 4, caractérisée en ce que le côté du tiroir (13) de valve dirigé vers le siège (12) de valve présente une surface (15) approximativement plane.

6. Valve selon l'une des. revendications 1 à 3, caractérisée en ce que le côté du siège (12) de valve dirigé vers le tiroir de valve (13) présente une surface(15) approximativement plane, tandis que le côté (15) de fermeture, situé en face, a une forme bombée, convexe ou conique.

7. Valve selon l'une des revendications 1 à 4, caractérisée en ce que les côtés du siège (12) de valve et du tiroir (13) de valve, dirigés l'un vers l'autre, présentent des surfaces bombées convexes ou coniques.

8. Valve selon l'une des revendications 1 à 3, caractérisée en ce que l'un des côtés qui sont dirigés l'un vers l'autre, et qui appartiennent d'une part au siège (12) de valve et d'autre part au tiroir (13) de valve, a une forme convexe ou une forme faisant saillie de façon similaire et en ce que l'autre côté a une forme concave ou en retrait de façon similaire, et en ce que les rayons du bombé ou l'angle d'obliquité des côtés concave ou en retrait sont supérieurs à ceux des côtés convexes ou faisant saillie.

9. Valve selon l'une des revendications 1 à 8, caractérisée en ce que le tiroir (13) de valve porte sur son côté (15) de fermeture un joint (14), de préférence en PTFE.

10. Valve selon l'une des revendications 1 à 9, caractérisée en ce qu'un dispositif de chauffage est installé dans la zone du siège (12) de valve.

11. Valve selon l'une des revendications 1 à 8, caractérisée en ce que le tiroir (13) de valve porte sur son côté (15) de fermeture un disque d'étanchéité (14) en métal poli brillant.

12. Valve selon l'une des revendications précédentes, caractérisée en ce que l'ouverture (18) du canal de sortie est prévue à l'extrémité d'un canal de sortie (9) en forme de capillaire.
